# EUROPEAN PATENT APPLICATION

(11) **EP 3 376 461 A1**
(43) Date of publication of application: **19.09.2018**
(21) Application number: 15907345.1
(22) Date of filing: 26.10.2015
(51) Int. Cl.: G06Q 50/10, G06Q 50/30

(54) **METHOD AND APPARATUS FOR HOSTING ONLINE COMPETITION**

(71) Applicant: Millenuum Inc., Seoul 05834 (KR)
(72) Inventor: LEE, Taeyup, Seoul 05834 (KR)
(74) Representative: Gulde & Partner
(86) International application number: PCT/KR2015/011336
(87) International publication number: WO 2017/073800

(57) **Abstract**

A method for hosting an online competition, according to the present invention, comprises the steps of: receiving, from a plurality of content producer computers, competition participation content items; transmitting, to at least one content consumer computer, at least one of the competition participation content items; receiving, from the at least one content consumer computer, evaluation information relating to at least one of the content participation items; generating a competition result on the basis of the evaluation information; transmitting, to at least one of the plurality of content producer computers, the competition result; and transmitting, to the at least one content consumer computer, the competition result, thereby enhancing the experience of consumers and, as a result, promoting continuous use.

## Description

### TECHNICAL FIELD

The present invention relates to an online competition method and an apparatus thereof.

### BACKGROUND ART

Although online competition services are introduced recently owing to development of Internet and computer techniques, since the services are operated focusing on popular contents or genres or famous content producers (CP), many outstanding producers are neglected, and fast varying consumption tendency and tastes of content consumers (CC) are not reflected, and since reliability of participants' identities and ranking selection method is low, participation of users (content producers and content consumers) in the competition is not enough. Accordingly, more reasonable and reliable online competition services are required.

### DISCLOSURE OF INVENTION

### TECHNICAL PROBLEM

Therefore, the present invention has been made to solve the above problems, and there is provided an efficient online competition method and an apparatus thereof.

### TECHNICAL SOLUTION

An online competition method performed by an online competition server according to an embodiment of the present invention comprises: receiving competition participation contents from a plurality of content producer computers; transmitting at least one of the competition participation contents to at least one content consumer computer; receiving evaluation information on the at least one of the competition participation contents from the at least one content consumer computer; generating a competition result on the basis of the evaluation information; transmitting the competition result to at least one of the plurality of content producer computers; and transmitting the competition result to the at least one content consumer computer.

Preferably, the online competition method repeatedly performs competitions on a weekly basis.

Preferably, in repeatedly performing competitions on a weekly basis, closing of application for participation, disclosure of participation contents, closing of evaluation, and announcement of a competition result are repeated regularly in units of hours.

Preferably, the online competition method further comprises: receiving self-introduction contents from the plurality of content producer computers; generating identification information for the competition participation contents on the basis of the competition participation contents and the self-introduction contents; and performing an error handling process on the competition participation contents according to the identification information.

Preferably, generating identification information includes: reading image and/or voice information from each of the competition participation contents; reading image and/or voice information from each of the self-introduction contents; and generating the identification information by comparing the image and/or voice information of each competition participation content with image and/or voice information of a corresponding self-introduction content.

Preferably, generating identification information includes: outputting the competition participation contents and the self-introduction contents to a manager of the online competition server; and receiving an input of identification confirmation information from the manager of the online competition server.

Preferably, generating identification information includes: transmitting at least one of the self-introduction contents to the at least one content consumer computer; and receiving identification information of the at least one of the competition participation contents from the at least one content consumer computer.

Preferably, the online competition method further comprises receiving add-to-favorite information of at least one of the competition participation contents from the at least one content consumer computer, wherein generating a competition result includes generating the competition result on the basis of the evaluation information and the add-to-favorite information.

Preferably, generating a competition result includes generating the competition result by applying weighting values to the evaluation information and the add-to-favorite information.

Preferably, the online competition method further comprises receiving share-to-social network information of at least one of the competition participation contents from the at least one content consumer computer, wherein generating a competition result includes generating the competition result on the basis of the evaluation information and the share-to-social network information.

Preferably, generating a competition result includes generating the competition result by applying a weighting value to the evaluation information and the share-to-social network information.

Preferably, the evaluation information includes a vote, and a content consumer voted for at least one of the competition participation contents is restricted not to vote for the voted competition participation content until the content consumer votes for competition participation contents other than the voted competition participation content as many as a predetermined number of times.

Preferably, the online competition method further comprises receiving genre information of the competition participation contents from the plurality of content producer computers, wherein generating a competition result includes generating a competition result by genre.

Preferably, transmitting the competition result to at least one of the plurality of content producer computers includes configuring the competition result by genre as a screen capable of preferentially confirming a result of competition in a genre in which a corresponding content producer participates and transmitting the competition result by genre to the at least one of the plurality of content producer computers.

Preferably, transmitting the competition result to the at least one content consumer computer includes configuring the competition result by genre as a screen capable of preferentially confirming a result of competition in a genre preferred by a corresponding content consumer and transmitting the competition result by genre to the at least one content consumer computer.

Preferably, the online competition method further comprises: receiving characteristic information of the competition participation contents from the plurality of content producer computers; and acquiring taste information of content consumers, wherein transmitting at least one of the competition participation contents to at least one content consumer computer includes: generating a play list on the basis of taste information of a corresponding content consumer and the characteristic information of the competition participation contents; and transmitting at least one of the competition participation contents according to the play list.

Preferably, the characteristic information of the competition participation contents includes at least one of a subgenre, a mood, a tempo, an activity situation appropriate for a consumer to appreciate the competition participation contents, and a feeling appropriate for a consumer to appreciate the competition participation contents.

Preferably, acquiring taste information of content consumers includes receiving taste information of a corresponding content consumer from the at least one content consumer computer or generating corresponding taste information on the basis of at least one of content playback history, evaluation history, add-to-favorite history, and share-to-social network history of each content consumer, as well as various kinds of relational information including relational information between a corresponding content consumer and another content consumer or relational information between all individual content consumers and individual contents.

Preferably, the online competition method further comprises: receiving environment information of a corresponding content consumer from the at least one content consumer computer, wherein generating a play list includes generating the play list on the basis of the taste information of a corresponding content consumer, the environment information of the corresponding content consumer, and the characteristic information of the competition participation contents.

Preferably, the environment information is information inputted by a corresponding content consumer, collected through a sensor of the at least one content consumer computer, or collected from an external service.

Preferably, the online competition method further comprises: storing, in a database, information on a content consumer who has conducted evaluation, add-to-favorite, or share-to-social network on at least one of the competition participation contents, with respect to a corresponding competition participation content; and transmitting information on the content consumer to a corresponding content producer computer.

Preferably, transmitting information on the content consumer to a corresponding content producer computer includes transmitting at least one of information on a name of the content consumer, information on a personal page, information on a message, and information on an e-mail.

Preferably, the online competition method further comprises, when a new competition participation content is received from one of the plurality of content producer computers, transmitting, with reference to the database, information on the new competition participation content to a computer of a content consumer who has conducted evaluation, add-to-favorite or share-to-social network on a content of a corresponding content producer.

An online competition server according to an embodiment of the present invention comprises: a communication unit for transmitting and receiving data; and a control unit for receiving competition participation contents from a plurality of content producer computers through the communication unit, transmitting at least one of the competition participation contents to at least one content consumer computer through the communication unit, receiving evaluation information on the at least one of the competition participation contents from the at least one content consumer computer through the communication unit, generating a competition result on the basis of the evaluation information, transmitting the competition result to at least one of the plurality of content producer computers through the communication unit, and transmitting the competition result to the at least one content consumer computer through the communication unit.

Preferably, the control unit repeatedly performs competitions on a weekly basis.

Preferably, in repeatedly performing competitions on a weekly basis, the control unit regularly repeats closing of application for participation, disclosure of participation contents, closing of evaluation, and announcement of a competition result in units of hours.

Preferably, the control unit receives self-introduction contents from the plurality of content producer computers through the communication unit, generates identification information for the competition participation contents on the basis of the competition participation contents and the self-introduction contents, and performs an error handling process on the competition participation contents according to the identification information.

Preferably, the control unit receives add-to-favorite information of at least one of the competition participation contents from the at least one content consumer computer through the communication unit, and generates the competition result on the basis of the evaluation information and the add-to-favorite information.

Preferably, the control unit receives genre information of the competition participation contents from the plurality of content producer computers through the communication unit, and generates a competition result by genre.

Preferably, the control unit receives characteristic information of the competition participation contents from the plurality of content producer computers, and acquires taste information of content consumers through the communication unit, wherein in transmitting at least one of the competition participation contents to at least one content consumer computer, the control unit generates a play list on the basis of taste information of a corresponding content consumer and the characteristic information of the competition participation contents, and transmits at least one of the competition participation contents according to the play list through the communication unit.

Preferably, the control unit receives environment information of a corresponding content consumer from the at least one content consumer computer through the communication unit, and in generating the play list, the control unit generates the play list on the basis of the taste information of a corresponding content consumer, the environment information of the corresponding content consumer, and the characteristic information of the competition participation contents.

Preferably, the control unit stores, in a database, information on a content consumer who has conducted evaluation, add-to-favorite, or share-to-social network on at least one of the competition participation contents, with respect to a corresponding competition participation content, and transmits information on the content consumer to a corresponding content producer computer through the communication unit.

The present invention includes a program stored in a medium to execute a method according to an embodiment of the present invention in a computer.

The present invention includes a computer-readable recording medium recording a program for executing a method according to an embodiment of the present invention in a computer.

### ADVANTAGEOUS EFFECTS

According to the present invention, in online competitions, continuous use of the services may be induced by enhancing the experience level of consumers.

### BRIEF DESCRIPTION OF THE DRAWINGS

FIG. 1 is a view schematically showing the configuration of an online competition system according to an embodiment of the present invention.
FIG. 2 is a view schematically showing the internal configuration of each device of FIG. 1.
FIG. 3 is a sequence diagram showing the flow of an online competition method according to an embodiment of the present invention.

### BEST MODE FOR CARRYING OUT THE INVENTION

Hereinafter, preferred embodiments of the present invention will be described in detail with reference to the accompanying drawings to clarify the spirit of the present invention. In describing the present invention, when it is determined that specific description of already known functions or constitutional components related to the present invention may make the gist of the present invention unclear, detailed description thereof will be omitted. Whenever possible, the same reference numerals and symbols are assigned to the constitutional components practically having the same functional configuration in the drawings although they are shown in different drawings. For the convenience of explanation, apparatuses and methods are described together in case of necessity.

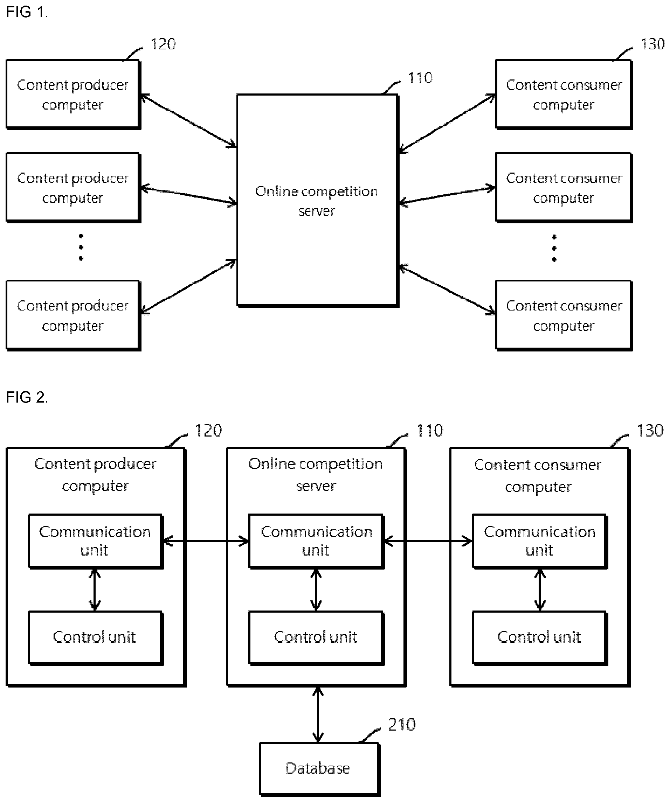

FIG. 1 is a view schematically showing the configuration of an online competition system according to an embodiment of the present invention. Referring to FIG. 1, an online competition system according to an embodiment of the present invention includes an online competition server 110, a content producer computer 120, and a content consumer computer 130 communicating with each other through one or more wired or wireless network connections. Here, the computer may include all devices corresponding to a computer, such as mobile devices including a smart phone, a tablet PC, a PDA and the like, as well as general computers.

The online competition server 110 may be a web server which provides an online competition site or a server which provides a service to a client program of a PC app, a mobile app, a web app or the like. The content producer computer 120 may be a computer through which a specific content producer logs into the online competition server 110 using its own ID from a web browser, an app or the like, and the content consumer computer 130 may be a computer through which a specific content consumer logs into the online competition server 110 using its own ID. The online competition includes all kinds of competitions in which many people compete their talents or skills with each other, and hereinafter, it will be described focusing on a music competition for the convenience of explanation.

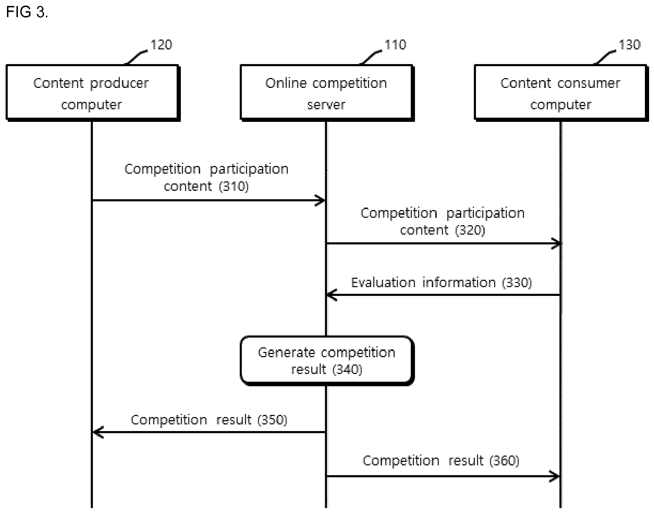

FIG. 2 is a view schematically showing the internal configuration of each device of FIG. 1. Referring to FIG. 2, the online competition server 110, the content producer computer 120 and the content consumer computer 130 may be provided with a communication unit for transmitting and receiving data and a control unit for processing the data transmitted and received through the communication unit. The online competition server 110 may use a database 210, and the database 210 may be included in the online competition server 110 according to embodiments. Although each of the devices may include one or more hardware processors and a network connection established through each communication unit and may further include various input and output devices (e.g., input keys, a keyboard, a mouse, a speaker and the like), storage devices, and memory devices, these components are omitted for the sake of convenience. Hereinafter, detailed operation of each control unit will be described with reference to FIG. 3.

FIG. 3 is a sequence diagram showing the flow of an online competition method according to an embodiment of the present invention. Referring to FIG. 3, a content producer transmits a content to be participated in a competition to the online competition server 110 through the content producer computer 120 (step 310). The competition participation content may be, for example, a music file or a video file containing singing or playing of the content producer. After receiving competition participation contents from a plurality of content producer computers 120, the online competition server 110 transmits at least one of the received competition participation contents to at least one content consumer computer 130 (step 320).

After appreciating the competition participation content through the content consumer computer 130, the content consumer transmits evaluation information on the content to the online competition server 110 (step 330). The evaluation information may include a vote, like/dislike, a score, a star point and the like, and hereinafter, it will described focusing on the vote for the convenience of explanation. After receiving evaluation information on at least one of competition participation contents from at least one content consumer computer 130, the online competition server 110 creates a competition result on the basis of the received evaluation information (step 340). The competition result may include competition rankings and winners. The online competition server 110 transmits the competition result to at least one of content producer computers 120 (step 350) and transmits the competition result to the at least one content consumer computer 130 (step 360).

In an embodiment, the online competition server 110 may open competition participation application slots on an online competition site for a predetermined period before the competition begins. A content producer confirming the competition participation application slots may create a competition participation content and apply for the competition by transmitting the competition participation content to the online competition server 110 through the content producer computer 120. The online competition server 110 may close receiving application for participation after receiving the application for a predetermined period, goes through an internal inspection to check whether there is any problem in the competition participation contents, and open the competition participation contents to content consumers by uploading the competition participation contents on the online competition site. The content consumers may appreciate the competition participation contents in the online competition site through the content consumer computers 130 and transmit evaluations of the appreciated contents to the online competition server 110 by uploading the evaluations on the online competition site. The online competition server 110 may receive evaluations of the content consumers for a predetermined period and, when the evaluation period is over, transmit a competition result to the content producer computer 120 and the content consumer computers 130 by creating and opening the competition result on the online competition site.

In an embodiment of the present invention, such a competition is regularly repeated on a weekly basis. Preferably, closing of application for participation, disclosure of participation contents, closing of evaluation, and announcement of a competition result are regularly repeated in units of hours. In addition, the opening of the competition participation application slots, the internal inspection of the contents and the like may also be regularly repeated in units of hours.

For example, the time for preparing music of good quality in advance is sufficiently provided to participants by opening the competition participation application slots one week before the competition begins, and application for participating in the competition is accepted from the moment of opening the competition participation application slots until 23:59 on Friday of the week before the competition (hereinafter, all the times are based on US Pacific Standard Time). The contents are inspected from 06:00 on Monday of the week before the competition until 05:59 on Monday of the competition week, and at 06:00 on Monday of the competition week, the competition participation contents are open to the public, and votes for the competition participation contents begin. After the votes are closed at 23:59 on Sunday of the competition week, final rankings and winners of the competition may be announced at 00:00 on Monday of the week after the competition (on the basis of US Pacific Standard Time, this time point is the time point of beginning Monday all around the world).

The repetition cycle of a previous online competition is irregular, and the competition is held by roughly determining only a duration of the competition. Since the competition is conducted for an extended period of time of about a year or a month, it is difficult to satisfy fast varying consumption desires of consumers or induce habitual use of users. However, since the content consumption tendency of consumers living in modern society varies very fast, e.g., the time of a sound source staying in a sound source chart is less than a week, in an embodiment of the present invention, fresh contents are continuously introduced and provided by holding a competition for a short period of a week considering the fast varying consumption tendency of consumers, and regular participation and use of users are induced through a predetermined schedule of beginning and ending a competition once a week at a predetermined time on a predetermined day. Particularly, since the life pattern of modern people is repeated on a weekly basis, repeating competitions once a week is very advantageous in inducing regular participation of consumers, compared with holding a competition once a month or a year. In addition, the short competition cycle of a week may persuade many people to easily participate in the competition without a burden. That is, since participants have a chance next week for making up for a failure although the result is dissatisfied this time, they will participate in the competition more actively.

Meanwhile, since the application for participation and upload of contents in an online competition are made online unlike an offline competition or audition which is progressed while a participant directly faces the judges and the audience, there is a risk in that a participant may take part in a competition by deceiving his or her identity or stealing contents of other people. Since such a risk critically acts on the reliability of the service, and it may lower the experience and value of providing the service and harm sustainability of the service in the end. Therefore, it is required to provide a method of systematically verifying the identity of a participant of an online competition.

In an embodiment of the present invention, the identity of a participant is verified through a process of receiving a self-introduction content of the participant, in addition to the competition participation content, and automatically or manually comparing the content and the self-introduction content. That is, the online competition server 110 may receive competition participation contents and self-introduction contents of participants from the content producer computers 120, generate identification information for the competition participation contents on the basis of the competition participation contents and the self-introduction contents, and performs an error handling process on the competition participation contents according to the generated identification information.

More specifically, when a content producer uploads a competition participation content to participate in a competition, a self-introduction content based on a voice and/or an image is uploaded together, and at this point, it may be directed to include the face of a participant himself or herself and/or an introduction speech of the participant's own voice and, if necessary, playing of the participant in the self-introduction content.

In the case of automatic verification, the online competition server 110 may read image and/or voice information from each of the competition participation contents, read image and/or voice information from each of the self-introduction contents, and generate identification information according to mutual identity by comparing the image and/or voice information of each competition participation content with image and/or voice information of a corresponding self-introduction content using an image and/or voice recognition technique. If a problem is found in a result of identification, an error handling process of storing the content ID in a 'problem content DB', excluding the content from a competition participation list, and informing the participant of exclusion may be performed. According to embodiments, existence of a problem may be finally confirmed by manually confirming the contents stored in the 'problem content DB' by the manager of the online competition server.

In the case of manual verification, the online competition server 110 may output the competition participation contents and the self-introduction contents to the server manager, and the server manager may compare the two contents and input identification information into the online competition server 110 according to a result of the comparison.

In an embodiment, the self-introduction contents are open to content consumers, together with the competition participation contents, and if a consumer appreciating a content finds a problem in the content in the process of evaluating the competition participation contents, the consumer sends a message to the manager by pressing a 'Report' button requesting the manage to confirm the content, and the manager may confirm whether there is a problem by confirming a reported content list on the manager screen.

Meanwhile, when all users including the content producers participating in the competition and the content consumers appreciating the competition do not accept a result of the competition, a serious problem may be invited in the reliability and sustainability of the service. Accordingly, a reasonable ranking selection method that can be accepted by all users is needed.

In an embodiment of the present invention, ranking selection may be determined by a combination of evaluation information of content consumers (hereinafter, it will be described focusing on the vote for the sake of convenience) and the number of add-to-favorites. That is, the online competition server 110 may receive evaluation information and add-to-favorite information on at least one of the competition participation contents from at least one content consumer computer 130 and generate a competition result on the basis of the received evaluation information and add-to-favorite information.

The voting method includes a charged voting method of receiving a voting fee from content consumers and a free voting method of waiving the voting fee. In the case of the charged voting method, a content consumer may deposit cyber money-type voting points in the content consumer's account of the service in advance and subtract a predetermined amount of voting points each time the content consumer votes. In the case of the free voting method, a predetermined number of voting chances are given to the content consumer's account each time a competition is held, and the voting chances may be subtracted by one each time the content consumer votes.

When each content consumer is allowed to vote several times, multiple voting needs to be restricted since it may seriously harm fairness of the vote if one content consumer continuously votes for one content. However, since it is worthy of respect that a content consumer has a particularly high intention of supporting a specific content, the multiple voting need to be allowed to some extent. Accordingly, in an embodiment of the present invention, each content consumer may not be allowed to vote for the same content multiple times within a predetermined number of votes (e.g., ten times) in each competition and allowed to vote for the same content again from a vote made after the predetermined number of votes. That is, the online competition server 110 may restrict a content consumer voted for at least one of competition participation contents not to vote for the corresponding competition participation content until the content consumer votes for a competition participation content other than the corresponding competition participation content as many as a predetermined number of times. In this case, since the content consumer should appreciate other contents further more to get a chance of multiple voting for a specific content, it may have an effect of persuading the content consumers to increase the time and frequency of using the service while appreciating further various contents.

Meanwhile, a content consumer may add a corresponding content in a play list provided for each personal account in the service in order to appreciate the competition participation content again. Although such a behavior of adding a content is less active than voting, it is regarded as a way of expressing a support for the content in a broad sense and may be reflected in calculation of rankings. In an embodiment of the present invention, the online competition server 110 may generate a result of the competition by applying weighting values to the evaluation information and the add-to-favorite information. That is, a score of a content may be calculated through a function which reflects a weighted average of the number of votes and the number of add-to-favorites of each content or other linear/nonlinear impacts, and at this point, a higher weighting value may be given to a vote, which is a intention of supporting in a more active sense (e.g., the ratio between the weighting values of the vote and the add-to-favorite is 10:1).

The process on the system of the ranking selection method may be implemented as described below.
① Collect vote scores (in the case of charged voting): Click the vote button by consumer → Check the vote point balance DB → Subtract vote points after inducing payment if the balance is insufficient after checking the balance, and subtract immediately if the balance is sufficient → Increase the vote score counter of a corresponding content by 1, and add corresponding consumer ID in the 'voter list' DB of a corresponding content
② Collect vote scores (in the case of free voting): Click vote button by consumer → Check the remaining vote count DB → Display an error message and terminate the process if the remaining number of votes is insufficient, and subtract the vote count if the remaining vote number is sufficient → Increase the vote score counter of a corresponding content by 1, and add corresponding consumer ID in the 'voter list' DB of a corresponding content
③ Collect add-to-favorite scores: Click the add-to-favorite button by consumer → Increase the add-to-favorite score counter of a corresponding content by 1, add corresponding consumer ID in the 'adding consumer list' DB of a corresponding content, and add corresponding content ID in the personal play list of a corresponding consumer
④ Collect scores: Add addition of vote scores and add-to-favorite scores in content-specific 'score' DB (calculate in real-time or collectively calculate at a predetermined time point)
⑤ Calculate rankings: On the basis of the 'score' calculated before, rank the contents from the first to the last in order of high score by comparing the 'score' among competing contents, and add the rankings in the 'ranking' DB (calculate in real-time or collectively calculate at a predetermined time point).
⑥ Open rankings: Open all and/or part of rankings (e.g., top ten and prize winners) through the screens of content producers and consumers
⑦ Select prize winners and transmit notification mails: Automatically transmit a mail informing prize winning to content producers who have created contents of top rankings in the competition

Meanwhile, the content consumer may share the competition participation contents in social networks to appreciate the contents together with other people. Since such a share-to-social network behavior may also be regarded as a comprehensive expression of supporting the contents, it can be reflected in calculation of rankings, and weighting values may be applied in the same manner as the add-to-favorite (e.g., the ratio between the weighting values of the vote and the share-to-social network is 5:1). That is, the online competition server 110 may receive evaluation information and share-to-social network information of at least one of the competition participation contents from at least one content consumer computer 130 and generate a competition result on the basis of the received evaluation information and share-to-social network information. The online competition server 110 may generate the competition result by applying a weighting value to each of the evaluation information and the share-to-social network information.

In addition, the online competition server 110 may generate a competition result on the basis of the evaluation information, the add-to-favorite information and the share-to-social network information. It is apparent that even in this case, a weight value may be applied to each of the information (e.g., the ratio among the weighting values of the evaluation, the add-to-favorite and the share-to-social network is 10:1:2).

In an embodiment of the present invention, since various kinds of additional information such as the add-to-favorite, the share-to-social network and the like, as well as the evaluation information of content consumers about the competition participation contents, are automatically collected and reflected in measurements of preference, more accurate and reliable preference measurements and ranking calculations can be made, in addition to the function of enhancing the experience level of consumers by diversifying the way of expressing the supportive behaviors.

Meanwhile, it is general that content producers are clearly classified according to the genre of generated contents, and it is also general that a large number of content consumers are specific in their preferred content genres. However, when all competition participation contents are uniformly competed without classification of genre, it is highly probable that a genre is distinctly isolated according to genre preference, and in this case, service experience of content producers of the contents corresponding to the isolated genre and content consumers who prefer the contents may be seriously hindered. Accordingly, it needs to provide an experience of a certain level or higher to the content producers and the content consumers of various genres by systematically classifying the competition participation contents by genre so that the competition participation contents may compete by genre.

In an embodiment of the present invention, the online competition server 110 may receive genre information of competition participation contents from a plurality of content producer computers and generate a competition result by genre. That is, it is allowed to select or input a genre of a participating content in the competition participation process of a content producer to contain the genre information by content ID, and rankings may be calculated within the contents of each genre. The online competition server 110 may configure a competition result generated by genre as a screen capable of preferentially confirming a competition result of a genre preferred by a corresponding content consumer and transmit the screen to the content consumer computer.

For the content producers, the genre is the most basic criterion for expressing the identity of a content of their own, and the psychological utility provided by the concept of competition within a genre is very high. In addition, since the genre acts as an important criterion which reflects a taste for contents from the viewpoint of content consumers, competition within a specific genre has an effect of preventing competition unfairness generated due to simple difference of consumers' tastes.

Meanwhile, when a large number of participants participate in a competition every week with numerous contents, in reality, a consumer may have a difficulty in appreciating all the contents one by one and making a vote. In addition, since many contents not matching the taste of a consumer may be mixed in the numerous contents, as the consumer is exposed to the contents irrelevant to the taste of the consumer several times in the process of looking for contents to vote for, fatigue builds up, and the consumer loses the will of appreciating the contents and may not stay in the service for a long time. Accordingly, it is required to provide a method which allows consumers to easily find contents suited to their tastes to selectively appreciate and easily vote for the contents within spatial constraints (a screen size and the like of a PC or a mobile device) and temporal constraints (a spare time allowed for contents mining).

in an embodiment of the present invention, the online competition server 110 may receive characteristic information of the competition participation contents from the content producer computers 120, acquire taste information of content consumers through the communication unit, generate a play list on the basis of taste information of a specific content consumer and the characteristic information of the competition participation contents, and transmit the competition participation contents to a corresponding content consumer computer 130 according to the generated play list. That is, it is allowed to select or input information containing the characteristics of a participating content in the competition participation process of a content producer to contain the characteristic information by content ID, and contents suited to the taste of the consumer may be provided to the consumer in a manner of radio broadcasting with reference to the characteristic information.

Here, the characteristic information of the competition participation contents may include a subgenre, a mood, a tempo, an activity situation appropriate for a consumer to appreciate a corresponding competition participation content, or a feeling of a consumer appropriate for the consumer to appreciate a corresponding competition participation content. The activity situation may include driving, exercising, jogging, and reading, and the feeling may include happiness, love, sorrow, depression, anger and the like. The taste information of a content consumer may be taste information of the content consumer inputted by the content consumer through the content consumer computer 130 when he or she joins the service and/or taste information generated on the basis of taste information generated on the basis of content playback history, evaluation history, add-to-favorite history, and share-to-social network history of each content consumer, as well as various kinds of relational information including relational information between a corresponding content consumer and another content consumer or relational information between all individual content consumers and individual contents, collected when the content consumer uses the service.

In an embodiment of the present invention, the online competition server 110 may receive environment information (e.g., studying, jogging, having a party or the like) of a corresponding content consumer from the content consumer computers 130 and use the environment information for generating a play list. Here, the environment information of a corresponding content consumer may be information selected or inputted by the consumer himself or herself through the content consumer computer 130, information automatically estimated through the information collected by software or hardware sensors in the content consumer computer 130, or information collected from external services. The external services may include an Internet site, a mobile app and the like which provide meteorological information.

In an embodiment, if a content consumer clicks a play button for appreciating all the contents or contents by genre, a curation algorithm may operate to automatically generate a play list optimized for the content consumer on the basis of the taste information and/or the environment information of the content consumer.

The present invention has an advantage of practically enhancing benefits of consumers and increasing the time of staying in the service, the frequency of use, and the frequency of vote by selectively providing contents suited to the taste of the consumers as described above.

Meanwhile, it needs to provide an efficient method capable of continuously communicating between content producers and content consumers, who have a primary relation already formed through the behavior of appreciating and evaluating contents by the content consumers, in order to continue and develop the relation.

In an embodiment of the present invention, the online competition server 110 may store, in a database of a corresponding competition participation content ID, information on a content consumer who has conducted evaluation, add-to-favorite, or share-to-social network on a competition participation content with respect to the competition participation content, and a corresponding content producer may confirm the names, the personal page link information and the like of content consumer who have conducted evaluation, add-to-favorite, or share-to-social network on the content producer's competition participation contents through the content producer computer 120, and transmit a message to a corresponding consumer or visit the personal page and leave a note.

In an embodiment, when a content producer uploads a new competition participation content through the content producer computer 120, the online competition server 110 may persuade the content consumers who have conducted evaluation, add-to-favorite, or share-to-social network on the competition participation contents of the content producer to visit and appreciate the service by transmitting information on the new competition participation content to the content consumer computers 30 as a push-type announcement message with reference to the database. Accordingly, the present invention may actively utilize a frame of competition as a method of enhancing communications between the content producers and the content consumers.

The example structures according to the present invention may be implemented in a variety of ways, such as program commands executed by a processor, software modules, micro-codes, computer program products recorded in a recording medium that can be read by a computer (includes all devices having an information processing function), logic circuits, ASICs, firmware and the like. Examples of the computer-readable recording medium are ROM, RAM, CD, DVD, magnetic tape, hard disk, floppy disk, hard disk, optical data storage device and the like, and a medium implemented in the form of a carrier wave (e.g., transmission through the Internet) is also included. In addition, the computer-readable recording medium may be distributed in computer systems connected through a network, and computer-readable codes may be stored and executed in a distributed manner.

The present invention has been described in detail focusing on the preferred embodiments shown in the drawings. These embodiments are not to restrict the present invention but only illustrative, and should be considered from the descriptive viewpoint, not restrictive viewpoint. The real technical protection scope should be defined by the technical spirit of the appended claims, not by the descriptions stated above. Although specific terms are used in the specification, they are used only for the purpose of describing the concept of the present invention, not to restrict the meaning or limit the scope of the present invention stated in the claims. Therefore, those skilled in the art may understand that various modified forms and equivalent other embodiments are possible without departing from the fundamental spirit of the present invention. It should be understood that the equivalents include equivalents that will be developed in the future, as well as presently known equivalents, i.e., all constitutional components invented to perform the same function regardless of a structure.

## Claims

1. An online competition method performed by an online competition server, the method comprising:
receiving competition participation contents from a plurality of content producer computers;
transmitting at least one of the competition participation contents to at least one content consumer computer;
receiving evaluation information on the at least one of the competition participation contents from the at least one content consumer computer;
generating a competition result on the basis of the evaluation information;
transmitting the competition result to at least one of the plurality of content producer computers; and
transmitting the competition result to the at least one content consumer computer.

2. The method according to claim 1, wherein competitions are repeatedly performed on a weekly basis.

3. The method according to claim 3, wherein in repeatedly performing competitions on a weekly basis, closing of application for participation, disclosure of participation contents, closing of evaluation, and announcement of a competition result are repeated regularly in units of hours.

4. The method according to claim 1, further comprising:
receiving self-introduction contents from the plurality of content producer computers;
generating identification information for the competition participation contents on the basis of the competition participation contents and the self-introduction contents; and
performing an error handling process on the competition participation contents according to the identification information.

5. The method according to claim 4, wherein generating identification information includes:
reading image and/or voice information from each of the competition participation contents;
reading image and/or voice information from each of the self-introduction contents; and
generating the identification information by comparing the image and/or voice information of each competition participation content with image and/or voice information of a corresponding self-introduction content.

6. The method according to claim 4, wherein generating identification information includes:
outputting the competition participation contents and the self-introduction contents to a manager of the online competition server; and
receiving an input of identification confirmation information from the manager of the online competition server.

7. The method according to claim 4, wherein generating identification information includes:
transmitting at least one of the self-introduction contents to the at least one content consumer computer; and
receiving identification information of the at least one of the competition participation contents from the at least one content consumer computer.

8. The method according to claim 1, further comprising receiving add-to-favorite information of at least one of the competition participation contents from the at least one content consumer computer, wherein generating a competition result includes generating the competition result on the basis of the evaluation information and the add-to-favorite information.

9. The method according to claim 8, wherein generating a competition result includes generating the competition result by applying weighting values to the evaluation information and the add-to-favorite information.

10. The method according to claim 1, further comprising receiving share-to-social network information of at least one of the competition participation contents from the at least one content consumer computer, wherein generating a competition result includes generating the competition result on the basis of the evaluation information and the share-to-social network information.

11. The method according to claim 10, wherein generating a competition result includes generating the competition result by applying a weighting value to the evaluation information and the share-to-social network information.

12. The method according to claim 1, wherein the evaluation information includes a vote, and a content consumer voted for at least one of the competition participation contents is restricted not to vote for the voted competition participation content until the content consumer votes for competition participation contents other than the voted competition participation content as many as a predetermined number of times.

13. The method according to claim 1, further comprising: receiving genre information of the competition participation contents from the plurality of content producer computers, wherein generating a competition result includes generating a competition result by genre.

14. The method according to claim 13, wherein transmitting the competition result to at least one of the plurality of content producer computers includes configuring the competition result by genre as a screen capable of preferentially confirming a result of competition in a genre in which a corresponding content producer participates and transmitting the competition result by genre to the at least one of the plurality of content producer computers.

15. The method according to claim 13, wherein transmitting the competition result to the at least one content consumer computer includes configuring the competition result by genre as a screen capable of preferentially confirming a result of competition in a genre preferred by a corresponding content consumer and transmitting the competition result by genre to the at least one content consumer computer.

16. The method according to claim 1, further comprising:
receiving characteristic information of the competition participation contents from the plurality of content producer computers; and
acquiring taste information of content consumers, wherein
transmitting at least one of the competition participation contents to at least one content consumer computer includes:
generating a play list on the basis of taste information of a corresponding content consumer and the characteristic information of the competition participation contents; and
transmitting at least one of the competition participation contents according to the play list.

17. The method according to claim 16, wherein the characteristic information of the competition participation contents includes at least one of a subgenre, a mood, a tempo, an activity situation appropriate for a consumer to appreciate the competition participation contents, and a feeling appropriate for a consumer to appreciate the competition participation contents.

18. The method according to claim 16, wherein acquiring taste information of content consumers includes receiving taste information of a corresponding content consumer from the at least one content consumer computer or generating corresponding taste information on the basis of at least one of content playback history, evaluation history, add-to-favorite history, and share-to-social network history of each content consumer, as well as various kinds of relational information including relational information between a corresponding content consumer and another content consumer or relational information between all individual content consumers and individual contents.

19. The method according to claim 16, further comprising receiving environment information of a corresponding content consumer from the at least one content consumer computer, wherein generating a play list includes generating the play list on the basis of the taste information of a corresponding content consumer, the environment information of the corresponding content consumer, and the characteristic information of the competition participation contents.

20. The method according to claim 19, wherein the environment information is information inputted by a corresponding content consumer, collected through a sensor of the at least one content consumer computer, or collected from an external service.

21. The method according to claim 1, further comprising:
storing, in a database, information on a content consumer who has conducted evaluation, add-to-favorite, or share-to-social network on at least one of the competition participation contents, with respect to a corresponding competition participation content; and
transmitting information on the content consumer to a corresponding content producer computer.

22. The method according to claim 21, wherein transmitting information on the content consumer to a corresponding content producer computer includes transmitting at least one of information on a name of the content consumer, information on a personal page, information on a message, and information on an e-mail.

23. The method according to claim 21, further comprising, when a new competition participation content is received from one of the plurality of content producer computers, transmitting, with reference to the database, information on the new competition participation content to a computer of a content consumer who has conducted evaluation, add-to-favorite or share-to-social network on a content of a corresponding content producer.

24. An online competition server comprising:
a communication unit for transmitting and receiving data; and
a control unit for receiving competition participation contents from a plurality of content producer computers through the communication unit, transmitting at least one of the competition participation contents to at least one content consumer computer through the communication unit, receiving evaluation information on the at least one of the competition participation contents from the at least one content consumer computer through the communication unit, generating a competition result on the basis of the evaluation information, transmitting the competition result to at least one of the plurality of content producer computers through the communication unit, and transmitting the competition result to the at least one content consumer computer through the communication unit.

25. The server according to claim 24, wherein the control unit repeatedly performs competitions on a weekly basis.

26. The server according to claim 25, wherein in repeatedly performing competitions on a weekly basis, the control unit regularly repeats closing of application for participation, disclosure of participation contents, closing of evaluation, and announcement of a competition result in units of hours.

27. The server according to claim 24, wherein the control unit receives self-introduction contents from the plurality of content producer computers through the communication unit, generates identification information for the competition participation contents on the basis of the competition participation contents and the self-introduction contents, and performs an error handling process on the competition participation contents according to the identification information.

28. The server according to claim 24, wherein the control unit receives add-to-favorite information of at least one of the competition participation contents from the at least one content consumer computer through the communication unit, and generates the competition result on the basis of the evaluation information and the add-to-favorite information.

29. The server according to claim 24, wherein the control unit receives genre information of the competition participation contents from the plurality of content producer computers through the communication unit, and generates a competition result by genre.

30. The server according to claim 24, wherein the control unit receives characteristic information of the competition participation contents from the plurality of content producer computers, and acquires taste information of content consumers through the communication unit, wherein in transmitting at least one of the competition participation contents to at least one content consumer computer, the control unit generates a play list on the basis of taste information of a corresponding content consumer and the characteristic information of the competition participation contents, and transmits at least one of the competition participation contents according to the play list through the communication unit.

31. The server according to claim 30, wherein the control unit receives environment information of a corresponding content consumer from the at least one content consumer computer through the communication unit, and in generating the play list, the control unit generates the play list on the basis of the taste information of a corresponding content consumer, the environment information of the corresponding content consumer, and the characteristic information of the competition participation contents.

32. The server according to claim 24, wherein the control unit stores, in a database, information on a content consumer who has conducted evaluation, add-to-favorite, or share-to-social network on at least one of the competition participation contents, with respect to a corresponding competition participation content, and transmits information on the content consumer to a corresponding content producer computer through the communication unit.

33. A computer program stored in a medium to execute the method according to any one of claims 1 to 23 in a computer.

34. A computer-readable recording medium recording a program for executing the method according to any one of claims 1 to 23.
